Europäisches Patentamt

European Patent Office

Office européen des brevets

(11) Publication number: **0 065 992**
**B1**

(12) EUROPEAN PATENT SPECIFICATION

(45) Date of publication of patent specification: **02.03.88**

(21) Application number: **81903224.4**

(22) Date of filing: **04.12.81**

(86) International application number:
**PCT/JP81/00365**

(87) International publication number:
**WO 82/01939 10.06.82 Gazette 82/15**

(51) Int. Cl.⁴: **G 01 L 5/00**

(54) STRESS DISTRIBUTION MEASURING INSTRUMENT.

(30) Priority: **05.12.80 JP 170873/80**

(43) Date of publication of application:
**08.12.82 Bulletin 82/49**

(45) Publication of the grant of the patent:
**02.03.88 Bulletin 88/09**

(84) Designated Contracting States:
**DE FR GB SE**

(56) References cited:
**WO-A-79/01156**
**JP-A-52 078 480**
**JP-A-56 115 932**
**JP-A-56 153 230**
**JP-B-49 030 754**
**LU-A- 77 479**

**PATENTS ABSTRACTS OF JAPAN, vol. 4, no.
51, April 17, 1980, page 13 P 7**

(73) Proprietor: **KABUSHIKI KAISHA KOMATSU
SEISAKUSHO**
**3-6, Akasaka 2-chome**
**Minato-ku Tokyo 107 (JP)**

(72) Inventor: **FUKUHARA, Toshihiko**
**903-6-208, Turumaki Hadano-shi**
**Kanagawa 257 (JP)**

(74) Representative: **Davies, Arthur Raymond et al**
**27, Imperial Square**
**Cheltenham, GL50 1RQ (GB)**

Courier Press, Leamington Spa, England.

## Description

This invention relates to a stress distribution measuring instrument for measuring the stress distribution in a structure, for example in a welded structure or a machine component.

In order to design and fabricate a welded structure or a machine component such that it exhibits approximate uniformity of structural strength, it is generally useful to know the stress distribution of the structure when a force is applied thereto.

Several types of stress distribution measuring instrument are known, such as a) a measuring instrument making use of a photoelastic method, and b) a measuring instrument using a coating method for measuring stress distribution. However, all of these instruments have the disadvantage that a thin uniform membrane having a thickness of several hundred micrometers must be attached to the surface of the object to be measured, and there are therefore difficulties in measuring the stress distribution of a structure of large size. Particularly with the coating method, since measurement in such a method utilises the brittleness of an organic substance, it is very difficult to control the dry condition of the membrane attached to the object to be measured, and furthermore the membrane itself exhibits disadvantageous toxicity.

The conventional stress distribution measurement is inconvenient in a number of respects in actual use and is particularly unsuitable for the measurement of the stress distribution of objects such as large structures and highly mechanical apparatus.

Japanese Specification No. 55—20469 discloses a device for judging surface faults on the surface of a high temperature specimen. The device detects the infrared radiation emitted from the surface, and makes a judgment on the basis of the difference determined by a subtraction circuit between image signals sampled by an A/D converter and stored in a memory circuit. However, such a device is not suitable for measuring the stress distribution in a structure.

International Specification No. W079/01156 discloses an instrument which displays the temperature distribution on the surface of an object when it is subjected to a predetermined load, on the basis of the detected temperature differences between various points on the surface of the object. However, the temperature distribution displayed by such an instrument will be dependent on the load applied and will vary when the load is varied, and furthermore the instrument will not supply sufficient information on the stress characteristics of the object.

In one arrangement disclosed, the known instrument includes an optical system for scanning the surface of the object as referred to in the preamble of present Claim 1, to which a periodically varying load is applied, an infrared radiation detector for detecting emission or absorption of infrared radiation by the object, an external force detector for detecting the occurrence of maximum and minimum loads applied to the object, a processor for calculating values from the outputs of the detectors and a display for visually displaying the calculated values. There is displayed for each point a separate temperature change which occurs when the load changes from a minimum to a maximum, or vice versa. Judgment can thereby be made as to which areas of the object are under compressive strain and which areas of the object are under tensile strain during variation in the load, as well as enabling determination of the extent of strain at each part of the object. However, such data is obtained by comparison with the applied external force, and the data thus tends to be "unstable".

Accordingly, an object of this invention is to provide a stress distribution measuring instrument with which the above-described difficulties can be avoided, and with which the stress distribution of an object to be measured can be accurately measured without having to attach a membrane to the object so that accurate measurement can be performed irrespective of the configuration and size of the object to be measured.

According to the invention there is provided a stress distribution measuring instrument comprising an optical system for scanning a two-dimensional surface of an object to be measured to which a periodically varying load is applied, the scanning being at a rate sufficiently greater than the rate of periodic variation of the load as to ensure continuous emission or absorption of infrared radiation by said object during scanning by said optical system, infrared radiation detection means for detecting emission or absorption of infrared radiation by said object and outputting electrical signals dependent on instantaneous values of the emitted or absorbed infrared radiation, external force detecting means for detecting at least the occurrence of maximum and minimum loads applied to said object, processor means for calculating stress distribution values for said two-dimensional surface of said object in dependence on the outputs of said detection means and said external force detecting means, and display means for visually displaying the calculated values, characterised in that said instrument further comprises an analog-to-digital converter for converting the electrical signals outputted from said detection means at respective scanned points on said two-dimensional surface of said object during scanning by said optical system into digital signals whose values correspond to the levels of said electrical signals, that said processor means serves to calculate, for each point, the difference between the value for the infrared radiation detected at the point on the occurrence of minimum load and the value for the infrared radiation detected at the same point on the occurrence of maximum load in dependence on said digital signals outputted from said analog-to-digital converter and on the maximum load timing and the minimum load timing detected by said external force detecting means, and that said display means serves to visually display the calculated differences at positions corresponding to the scanned points of said object.

In the invention, the fact is made use of that, when an external force, e.g. adiabatic compression or expansion, is applied to a solid, a variation in the quantity of heat input or output from the solid, e.g. exothermic or endothermic, occurs proportional to the amplitude of the strain applied to the solid as in a gas or liquid. According to the invention a desired stress distribution is obtained through the steps of applying a periodically varying external force to the solid or object to be measured, scanning a two-dimensional surface of the object with suitable scanning means together with infrared radiation detection means, and calculating, for each point, the difference between the infrared radiation detected at the occurrence of minimum load and the infrared radiation detection at the occurrence of maximum load. It is preferred to correct the above calculation in accordance with the shape, material, and/or infrared radiation rate of the object to be measured when carrying out the calculation.

In the stress distribution measuring instrument according to this invention, the distribution of the infrared radiation emitted or absorbed at the surface of the object to which an adequate external force is applied is detected and analysed, whereby the stress distribution in the object can be measured without having to attach a membrane to the object. Furthermore, measurement of the stress distribution can be effectively and accurately performed regardless of the shape and size of the object.

In order that the invention may be more fully understood, a preferred embodiment of the invention will now be described, by way of example, with reference to the accompanying drawings, in which:

Figure 1 is a graphical diagram showing the relationship between the quantity of strain and the quantity of infrared radiation;

Figure 2 is a block diagram of the preferred stress distribution measuring instrument;

Figure 3 is a graphical diagram showing the external force applied to the object to be measured; and

Figure 4 is a timing chart showing part of the operation of the preferred embodiment.

When the relationship between strain and the heat input to, or output from, a solid is considered, it is found that a similar exothermic or endothermic result proportional to the strain applied is obtained in a solid as in a gas or liquid when an external force, e.g. adiabatic compression or expansion, is applied to the solid. The following relationship can be derived from the above fact;

(Quantity of strain) $\propto$ (Quantity of variation in input or output of heat)

Since the stress $\sigma$ is given by:

$$\sigma = E\varepsilon$$

where $\varepsilon$ represents the quantity of strain and E represents Young's modulus, the stress in the solid can be obtained if the variation in the input or output of heat proportional to the strain is determined.

The relationship between the input or output of heat and the quantity of infrared radiation will now be considered. The quantity IR of infrared radiation is given by:

$$IR = T^4K \text{ (Kirchhoff's law)}$$

where T (absolute temperature) represents the input or output of heat, and K represents the infrared radiation rate (which is determined by the substance and the surface state thereof), so that there is a dependent relationship between the quantity of infrared radiation and the input or output of heat.

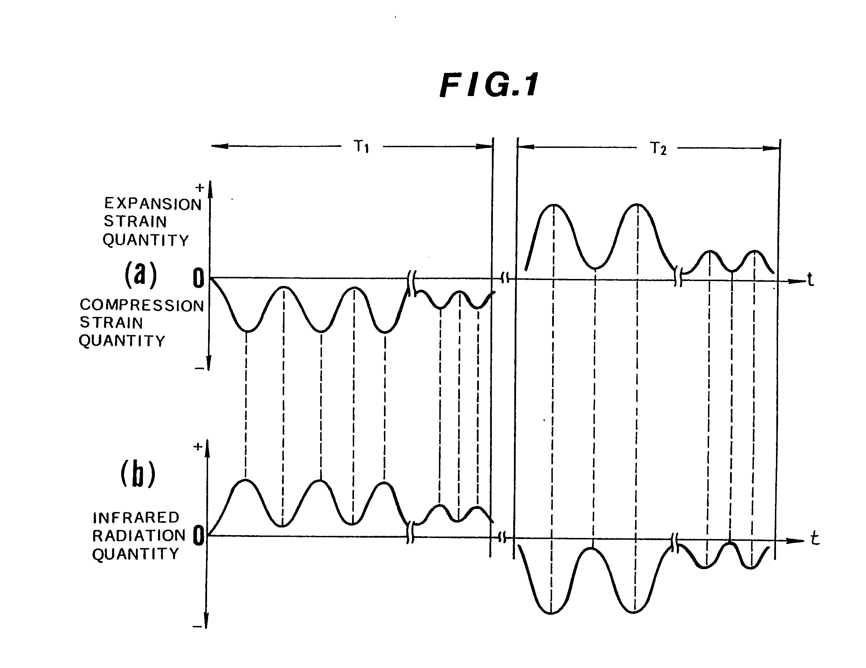

Accordingly, in order to determine the stress in a solid, it is only necessary to measure the quantity of the infrared radiation irradiated when compressive or tensile strain occurs in the solid due to an external force applied thereto. Figure 1 shows the relationship between the quantity of strain and the quantity of infrared radiation.

Referring to Figure 1, (a) represents the quantity of the strain in the solid, and (b) represents the quantity of infrared radiation irradiated from the solid. It will be appreciated from Figure 1 that irradiation of infrared rays (exotherm) of a quantity proportional to the quantity of the strain occurs during the period $T_1$ in which a compressive strain is generated by the external force applied to the solid, and absorption of infrared rays (endotherm) proportional to the quantity of the strain occurs during the period $T_2$ in which a tensile strain is generated in the solid.

In the case of a solid, when an external force is applied, a stress distribution specific to a condition based on the shape, substance, etc. will occur in the solid, and irradiation or absorption of a large quantity of infrared rays results in those areas where the strain is high in the strain distribution of the solid, and irradiation or absorption of a small quantity of infrared rays results in those areas where the strain is low.

Therefore, the stress distribution of an object to be measured, such as a welded structure or a machine component, can be determined by measuring the distribution of the quantity of infrared radiation irradiated or absorbed when an external force is applied to the object and a compressive or tensile strain is caused to occur in the object.

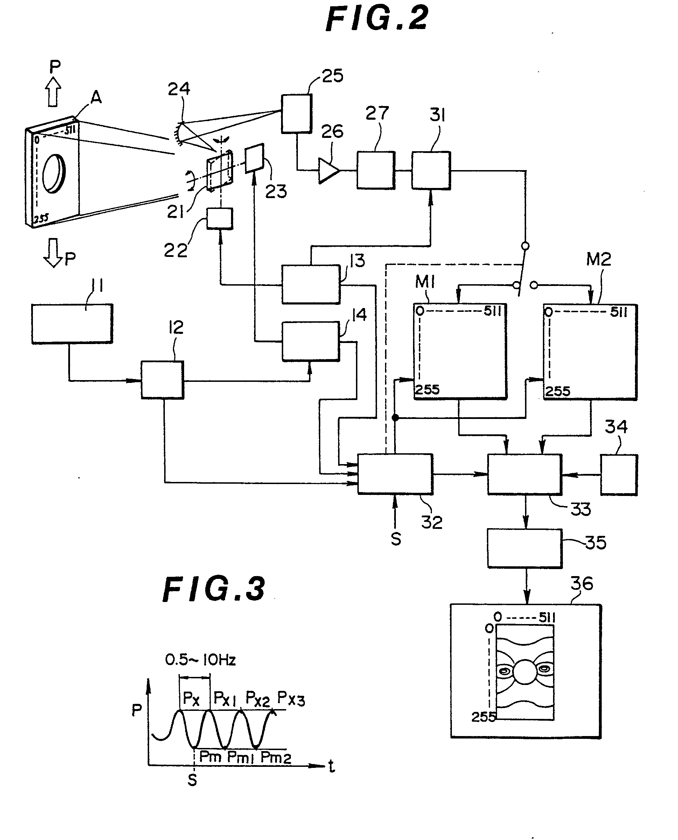

The preferred stress distribution measuring instrument according to this invention will now be described in detail with reference to Figure 2.

In Figure 2, reference character A represents an object to be measured, to which an external force P is applied by a suitable loading device (not shown). When a strain occurs in the object A, infrared radiation will be irradiated or absorbed with a distribution corresponding to the strain distribution. In this case, the above external force P is applied at a predetermined frequency (0.5 Hz to 10 Hz) and a predetermined amplitude as shown in Figure 3, and the quantity distribution of the infrared radiation will vary in accordance with the frequency and the amplitude of the external force P.

The preferred stress distribution measuring instrument comprises a camera controlling section having an external force detector 11, a phase synchroniser 12, a horizontal scan oscillator 13 and a vertical scan oscillator 14, an infrared ray camera having a scanning mirror 21, a rocking device 22, a step motor 23, a concave mirror 24, an infrared radiation detector 25, a preamplifier 26, a lineariser 27, and a data processor having memories M1 and M2, an A/D converter 31, processors 32 and 33, a parameter setting unit 34, a ranking unit 35 and a display unit 36. The functions and the operations of the respective sections, devices and units will be described in detail.

The external force detector 11 mounted on the loading device or in some other position serves to detect the loading maxima and minima at each period during which the external force P (see Figure 3) is applied as well as the duration of the period, and the detection signal from the external force detector 11 is in turn applied to the phase synchroniser 12.

The phase synchroniser 12 serves to control the oscillation frequency of the vertical scan oscillator 14 in accordance with the detection signal from the external force detector 11 and so operates to synchronise the oscillation frequency with the frequency of the applied external force P. This synchroniser 12 also supplies information on the loading maxima and minima sequentially detected by the external force detector 11 to the first processor 32.

The vertical scan oscillator 14 serves to supply a driving signal whose frequency is controlled by the phase synchroniser 12 to the step motor 23. In this manner, the step motor 23 tilts the scanning mirror 21 about the X-axis at a rate of one step for each period of the applied external force so as to scan in the Y-axis (vertical) direction. The oscillation signal from the vertical scan oscillator 14 is also applied to the first processor 32 and is used as one of the synchronising signals when carrying out the data processing described below.

The horizontal scan oscillator 13 serves to supply a signal whose frequency is sufficiently higher (e.g. higher by 10 or 100 times) than the oscillation frequency at the vertical scan oscillator 14 to the rocking device 22 so as to continuously drive the rocking device 22. In this manner, the rocking device 22 serves to rock the scanning mirror 21 about the Y-axis so as to scan in the X-axis (horizontal) direction at high speed. Further, the oscillation signal from the horizontal scan oscillator 13 is also applied to the A/D converter 31 and the first processor 32, and is used as one of the synchronising signals when carrying out the data processing which will be described below.

The scanning mirror 21 serves to sequentially scan the two-dimensional plane of the object A during high speed rocking about the Y-axis and stepwise tilting about the X-axis direction, so as to decompose and reflect the infrared rays emitted from the two-dimensional surface of the object at each zone, and the infrared rays thus reflected are further condensed and reflected by the concave mirror 24 and are then input into the infrared radiation detector 25.

The infrared radiation detector 25 serves to output an electrical signal corresponding to the quantity of the input infrared radiation, and the electrical signal output from the infrared detector is applied to the lineariser 27 through the preamplifier 26 for linearisation of the signal.

The A/D converter 31 serves to sample the output analog signal (infrared radiation quantity data) from the lineariser 27 in accordance with the oscillation signal period of the horizontal scan oscillator 13, to convert the sampled signals into digital signals responsive to the levels of the sampled signals, and the infrared radiation quantity data thus converted into digital form is written or loaded into the memory M1 or M2 under the control of the first processor 32 and is then read therefrom. More particularly, the first processor 32 serves to form a predetermined address signal in accordance with the periods of the oscillation signals of the horizontal and vertical scan oscillators 13 and 14 and to control the loading of the infrared radiation quantity data at the desired time point selectively into the memory M1 or M2. When the start signal S is applied, the aforementioned series of steps are started. The processor also serves to form similarly the predetermined address signal when the data loaded in the memories M1 and M2 are read and to control the reading of the predetermined data sequentially. In reading, two data items loaded into words in the memories M1 and M2 whose address is the same are simultaneously read. In this embodiment, an 128 k word memory having 512 X addresses (addresses 0 to 511) and 256 Y addresses (addresses 0 to 255) is used as the memories M1 and M2 as shown in Figure 2.

The second processor 33 serves to calculate the difference between two data items sequentially read by the first processor 32, and to calculate and correct the calculated values, in accordance with parameters (representing shape, material, infrared radiation rate, etc. of the object A) supplied from the parameter setting unit 34, and the values thus corrected and calculated are sequentially applied to the ranking unit 35.

The ranking unit 35 includes comparators and serves to rank or order the data thus input in accordance with the magnitude of the data amongst, for example, 10 to 25 grades.

The display unit 36 serves to suitably classify (e.g. by colour classification) the respective data ranked into 10 to 25 grades corresponding to the ranking and to reproduce and display the classified data according to positions where the data have been collected from the object A.

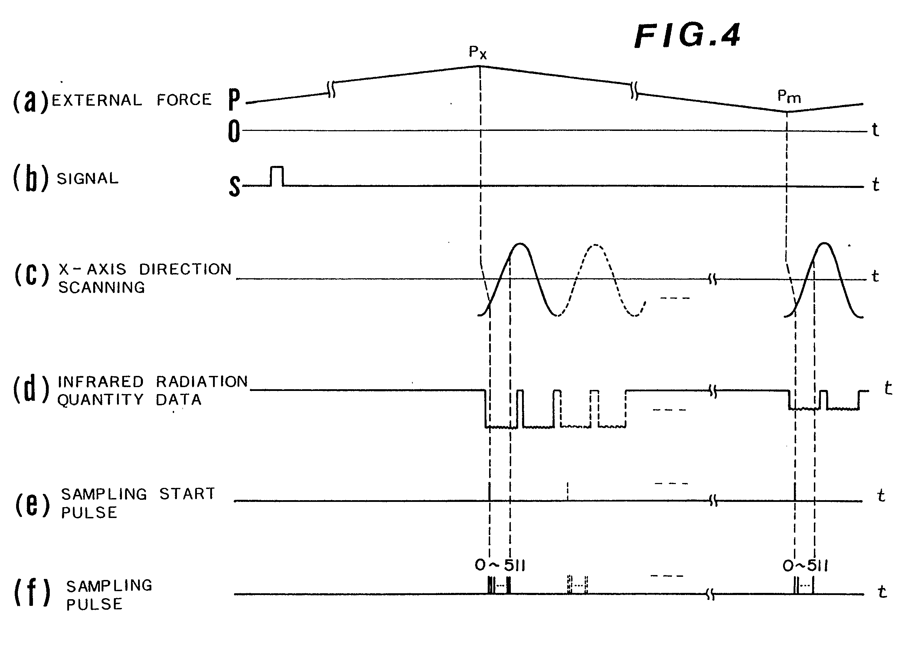

The operation of the infrared radiation measuring instrument of this embodiment will now be described. Figure 4 illustrates a timing chart showing the timings at which the infrared radiation quantity data are obtained.

When the start signal S is inputted into the first processor 32 at the timing shown in Figure 4(b), the first processor 32 selectively connects the memory M1 to the A/D converter 31 at the time when the first loading maximum $P_x1$ of the external force P is detected by the external force detector 11 (Figure 4(a)). At this time the scanning mirror 21 scans the two-dimensional surface of the object A (see Figure 4(c)) in the X-axis direction with the mirror being in the position "0" in the Y-axis direction, and the infrared radiation quantity data corresponding to the scanning (see Figure 4(d)) is applied through the infrared radiation detector 25, the preamplifier 26 and the lineariser 27 to the A/D converter 31. Then, the A/D converter 31 samples the infrared radiation quantity data of one scan of the scanning mirror 21 at a rate corresponding to the number of X addresses of the memories M1 and M2, that is 512 times, in response to the sampling start pulse (see Figure 4(e)) produced in synchronisation with the oscillation signal from the horizontal scan oscillator 13, and then digitally converts the sampled signal. In the meantime, the first processor 32 designates the writing address to the memory M1 in synchronisation with the sampling of the A/D converter 31, and the infrared radiation quantity data thus digitally converted is loaded into the respective words of the Y address of "0" and of X addresses of "0" to "511" of the memory M1.

Then, when the first loading minimum $P_m1$ of the external force P shown in Figure 4(a) is detected by the external force detector 11, the first processor 32 selects and connects the memory M2 to the A/D converter 31. Accordingly, the infrared radiation quantity data corresponding to the scanning at this time is digitally converted, and loaded into the respective words of the Y address of "0" and of X addresses of "0" to "511" of the memory M2.

Thus, the infrared radiation quantity data at the loading maximum is loaded into the memory M1, and the infrared radiation quantity data at the loading minimum is loaded into the memory M2.

When the afore-mentioned operation has been completed, the vertical scan oscillator 14 sends a signal to the step motor 23 to cause a step movement of the scanning mirror 21 by an amount of 1/256 of the deflecting angle with respect to the Y-axis direction. Simultaneously, it also sends to the first processor 32 a signal indicating the one step movement in the Y-axis direction whereby the Y addresses of the memories M1 and M2 are advanced from "0" to "1" by one step.

Thereafter, the memory M1 is similarly loaded with the infrared radiation quantity data at the loading maximum in the words of the Y address of "1" and X addresses of "0" to "511", and the infrared radiation quantity data at the loading minimum are loaded in the words of the Y address of "1" and X addresses of "0" to "511" of the memory M2.

When the above-described operation has been repeated an appropriate number of times and the measurements with respect to a Y address of "255" have been completed, the first processor 32 sequentially reads the infrared radiation quantity data loaded in the words of the memories M1 and M2 whose addresses are the same and applies the data to the second processor 33. The second processor 33 calculates, for example, the difference:

(Infrared radiation quantity at loading minimum)

− (Infrared radiation quantity at loading maximum)

and then multiplies it by the parameter described before to carry out the necessary data correction. If the difference is positive, it denotes the occurrence of the tensile strain, and, if it is negative, it denotes the occurrence of the compressive strain in the object. The calculated data thus obtained is suitably ordered as described above, and visually displayed as a stress distribution diagram.

In this embodiment, the S/N (signal/noise) ratio can be improved if suitable integrators are interposed between the memories M1 and M2 and the loading data to the memories is integrated at prescribed times. In this way the measurements due to the heat input or output caused by the external force can be retained for a short time, and the temperature sensitivity of the apparatus can be improved so as to improve the resolution capacity when scanning operations are repeated in the meantime and the infrared ray irradiation quantity data thus obtained by the respective scannings are integrated.

Though the foregoing description of this embodiment assumes the application of the external force to the object A to be measured by a suitable loading device, the stress distribution can be measured in the actual load state, depending upon the nature of the object to be measured. For instance, where the object is the hull of a ship which is actually afloat on the sea, the external force is applied by the pressure of the waves acting periodically on the hull of the ship.

Further, the method of scanning the two-dimensional surface of the object used in this invention can be any type, and any method may be employed for collecting the infrared radiation quantity data for the loading maxima and minima from all zones of the two-dimensional surface of the object scanned. If it is desired to determine the stress distribution of only a part of the object to be measured, that part of the object may be selectively scanned, and the infrared radiation quantity data for that part of the object may be collected.

In the above-described embodiment, the data collected is temporarily stored in the memories M1 and M2. However, the apparatus may be so constructed as to display the stress distribution in real-time simultaneously upon collection of the data. On the other hand, the apparatus may be so constructed as to suitably store the raw data collected at the measuring location in a PCM modulated manner, and to process the stored data off-line. In this case, the oscillation frequency of the horizontal scan oscillator 13 is set at 60 Hz, and the above data is conveniently synchronised with the vertical period of a television for reproducing and displaying the data.

In the foregoing description, the stress distribution measuring instrument according to this invention is very simple in operation and can measure effectively and accurately the stress distribution of an object to be measured, whatever the shape and size of the object, and can particularly advantageously perform the stress distribution measurement of objects such as the chassis of a vehicle, an iron bridge, the hull of a ship, the working unit of various construction machines, etc.

**Claims**

1. A stress distribution measuring instrument comprising an optical system (21, 24) for scanning a two-dimensional surface of an object (A) to be measured to which a periodically varying load is applied, the scanning being at a rate sufficiently greater than the rate of periodic variation of the load as to ensure continuous emission or absorption of infrared radiation by said object (A) during scanning by said optical system, infrared radiation detection means (25) for detecting emission or absorption of infrared radiation by said object (A) and outputting electrical signals dependent on instantaneous values of the emitted or absorbed infrared radiation, external force detecting means (11) for detecting at least the occurrence of maximum and minimum loads applied to said object (A), processor means (32, 33) for calculating stress distribution values for said two-dimensional surface of said object (A) in dependence on the outputs of said detection means (25) and said external force detecting means (11), and display means (36) for visually displaying the calculated values, characterised in that said instrument further comprises an analog-to-digital converter (31) for converting the electrical signals outputted from said detection means (25) at respective scanned points on said two-dimensional surface of said object (A) during scanning by said optical system (21, 24) into digital signals whose values correspond to the levels of said electrical signals, that said processor means (32, 33) serves to calculate, for each point, the difference between the value for the infrared radiation detected at the point on the occurrence of minimum load and the value for the infrared radiation detected at the same point on the occurrence of maximum load in dependence on said digital signals outputted from said analog-to-digital converter (31) and on the maximum load timing and the minimum load timing detected by said external force detecting means (11), and that said display means (36) serves to visually display the calculated differences at positions corresponding to the scanned points of said object (A).

2. A stress distribution measuring instrument as claimed in claim 1, characterised in that said processor means (32, 33) comprises a first memory (M1) for storing data corresponding to the detected infrared radiation for each point when maximum load is applied and a second memory (M2) for storing data corresponding to the detected infrared radiation for each point when minimum load is applied.

3. A stress distribution measuring instrument as claimed in claim 2, characterised in that said processor means (32, 33) comprises integrator means connected to the inputs of the first and second memories (M1, M2) and serving to integrate the value for the infrared radiation detected for each point when maximum load is applied and to supply the integrated value to the first memory (M1), and also to integrate the value for the infrared radiation detected for each point when minimum load is applied and to supply the integrated value to the second memory (M2).

4. A stress distribution measuring instrument as claimed in claim 1, 2 or 3, characterised in that said processor means (32, 33) comprises a parameter setting unit (34) for supplying parameters, such as the shape and infrared radiation rate of the object (A), for correcting the calculated data.

5. A stress distribution measuring instrument as claimed in claim 1, 2 or 3, characterised in that said display means (36) comprises a sorting unit for ordering the data from said processor means (32, 33).

**Patentansprüche**

1. Spannungsverteilungsmeßinstrument mit einem optischen System (21, 24) zum Abtasten einer zweidimensionalen Oberfläche eines zu vermessenden Objekts (A), auf das eine sich periodisch verändernde Belastung ausgeübt wird, wobei das Abtasten mit einer Geschwindigkeit erfolgt, die ausreichend größer ist als die Geschwindigkeit der periodischen Veränderung der Belastung, um eine kontinuierliche Emission oder Absorption von Infrarotstrahlung durch das Objekt (A) während der Abtastung durch das optische System zu gewährleisten, mit einer Infrarotstrahlungserfassungseinrichtung (25) zum Erfassen der Emission oder Absorption von Infrarotstrahlung durch das Objekt (A) und zum Abgeben von elektrischen Signalen in Abhängigkeit von den Augenblickswerten der emittierten oder absorbierten Infrarotstrahlung, einer Einrichtung (11) zum Erfassen einer externen Kraft, die wenigstens das Auftreten von auf das Objekt (A) ausgeübten maximalen und minimalen Belastungen erfaßt, einer Prozessoreinrichtung (32, 33) zum Berechnen von Spannungsverteilungswerten für die zweidimensionale Oberfläche des Objekts (A) in Abhängigkeit von den Ausgangssignalen der Erfassungseinrichtung (25) und der Einrichtung (11) zum Erfassen einer externen Kraft, und einer Anzeigeeinrichtung (36) zum visuellen Anzeigen der berechneten Werte, dadurch gekennzeichnet, daß das Instrument weiter einen Analog/Digital-Wandler (31) zum Umwandeln der elektrischen Signale, die von der Erfassungseinrichtung (25) in abgetasteten Punkten auf der zweidimensionalen Oberfläche des Objekts (A) während der Abtastung durch das optische System (21, 24) abgegeben werden, in digitale Signale, deren Werte den Pegeln der elektrischen Signale entsprechen, daß die Prozessoreinrichtung (32, 33) dazu dient, für jeden Punkt die Differenz zwischen dem Wert für die Infrarotstrahlung, die in dem Punkt bei dem Auftreten der minimalen Belastung erfaßt wird, und dem Wert für die Infrarotstrahlung, die in demselben Punkt bei dem Auftreten der maximalen Belastung erfaßt wird, in Abhängigkeit von den Digitalsignalen, die von dem Analog/Digital-Wandler (31) abgegeben werden, und von dem Maximallasttakt und dem Minimallasttakt, der durch die Einrichtung (11) zum Erfassen einer externen Kraft erfaßt wird, zu berechnen, und daß die Anzeigeeinrichtung (36) dazu cient, die berechneten Differenzen in Positionen, die den abgetasteten Punkten des Objekts (A) entsprechen, visuell anzuzeigen.

2. Spannungsverteilungsmeßinstrument nach Anspruch 1, dadurch gekennzeichnet, daß die Prozessoreinrichtung (32, 33) einen ersten Speicher (M1) zum Speichern von Daten, die der erfaßten Infrarotstrahlung für jeden Punkt entsprechen, wenn die Maximallast ausgeübt wird, und einen zweiten Speicher (M2) aufweist zum Speichern von Daten, die der erfaßten Infrarotstrahlung für jeden Punkt entsprechen, wenn die Minimallast ausgeübt wird.

3. Spannungsverteilungsmeßinstrument nach Anspruch 2, dadurch gekennzeichnet, daß die Prozessoreinrichtung (32, 33) eine Integratoreinrichtung aufweist, die mit den Eingängen des ersten und des zweiten Speichers (M1, M2) verbunden ist und dazu dient, den Wert für die Infrarotstrahlung integrieren, die für jeden Punkt erfaßt wird, wenn die Maximallast ausgeübt wird, und den integrierten Wert an den ersten Speicher (M1) abzugeben und außerdem den Wert für die Infrarotstrahlung zu integrieren, die für jeden Punkt erfaßt wird, wenn die Minimallast ausgeübt wird, und den integrierten Wert an den zweiten Speicher (M2) abzugeben.

4. Spannungsverteilungsmeßinstrument nach Anspruch 1, 2 oder 3, dadurch gekennzeichnet, daß die Prozessoreinrichtung (32, 33) eine Parametereinstelleinheit (34) zum Abgeben von Parametern wie der Form und der Infrarotstrahlungsgeschwindigkeit des Objekts (A) zum Korrigieren der berechneten Daten aufweist.

5. Spannungsverteilungsmeßinstrument nach Anspruch 1, 2 oder 3, dadurch gekennzeichnet, daß die Anzeigeeinrichtung (36) eine Sortiereinheit zum Ordnen der Daten aus der Prozessoreinrichtung (32, 33) aufweist.

## Revendications

1. Instrument de mesure de la répartition de contraintes comprenant un système optique (21, 24) pour balayer une surface à deux dimensions d'un objet (A) devant être mesuré auquel une charge variant périodiquement est appliquée, le balayage étant effectué à une vitesse suffisamment plus grande que la vitesse de variation périodique de la charge de manière à assurer une émission ou absorption continue d'un rayonnement infrarouge par l'objet (A) pendant le balayage par le système optique, des moyens (25) de détection de rayonnement infrarouge pour détecter l'émission ou l'absorption de rayonnement infrarouge par l'objet (A) et pour délivrer à leur sortie des signaux électriques dépendant des valeurs instantanées du rayonnement infrarouge émis ou absorbées, des moyens (11) détection d'une force externe pour détecter au moins l'apparition de charges maximale et minimale appliquées à l'objet (A), un processeur (32, 33) pour calculer les valeurs de répartition des contraintes sur la surface à deux dimensions de l'objet (A) en fonction des signaux de sortie des moyens de détection (25) et des moyens (11) de détection d'une force externe, et des moyens d'affichage (36) pour afficher visuellement les valeurs calculées, caractérisé en ce qu'il comprend en outre un convertisseur analogique/numérique (31) pour convertir les signaux électriques qui sont émis à la sortie des moyens de détection (25) end es points balayés respectifs sur la surface à deux dimensions de l'objet (A), pendant le balayage par le système optique (21, 24), en signaux numériques dont les valeurs correspondant aux niveaux de ces signaux électriques, le processeur (32, 33) sert à calculer, pour chaque point, la différence entre la valeur pour le rayonnement infrarouge détecté en ce point lors de l'apparition de la charge minimale et la valeur pour le rayonnement infrarouge détecté en ce même point lors de l'apparition de la charge maximale, en fonction des signaux numériques délivrés à la sortie du convertisseur analogique/numérique (31) et de l'instant de l'apparition de la charge maximale et de l'instant de l'apparition de la charge minimale détectés par les moyens (11) de détection d'une force externe, et les moyens d'affichage (36) servent à afficher visuellement les différences calculées pour des positions correspondant aux points balayés de l'objet (A).

2. Instrument de mesure de la répartition de contraintes suivant la revendication 1 caractérisé en ce que le processeur (32, 33) comprend une première mémoire (M1) pour stocker des données correspondant au rayonnement infrarouge détecté pour chaque point lorsque la charge maximale est appliquée, et une seconde mémoire (M2) pour stocker des données correspondant au rayonnement infrarouge détecté pour chaque point lorsque la charge minimale est appliquée.

3. Instrument de mesure de la répartition de contraintes suivant la revendication 2 caractérisé en ce que le processeur (32, 33) comprend un intégrateur connecté aux entrées des première et seconde mémoires (M1, M2) et servant à intégrer la valeur pour le rayonnement infrarouge détecté pour chaque point lorsque la charge maximale est appliquée, et à fournir la valeur intégrée à la première mémoire (M1), et également à intégrer la valeur pour le rayonnement infrarouge détecté pour chaque point lorsque la charge minimale est appliquée et à fournir la valeur intégrée à la seconde mémoire (M2).

4. Instrument de mesure de la répartition de contraintes suivant l'une quelconque des revendications 1, 2 ou 3 caractérisé en ce que le processeur (32, 33) comprend une unité de réglage de paramètres (34) pour fournir des paramètres, telle que la forme et le taux de rayonnement infrarouge de l'objet (A), pour corriger les données calculées.

5. Instrument de mesure de la répartition de contraintes suivant l'une quelconque des revendications 1, 2 ou 3 caractérisé en ce que les moyens d'affichage (36) comprennent une unité de triage pour ordonner les données provenant du processeur (32, 33).

# FIG.1

(a) EXPANSION STRAIN QUANTITY / COMPRESSION STRAIN QUANTITY

(b) INFRARED RADIATION QUANTITY

0 065 992

# FIG.2

# FIG.3

# FIG.4

(a) EXTERNAL FORCE P

(b) SIGNAL S

(c) X-AXIS DIRECTION SCANNING

(d) INFRARED RADIATION QUANTITY DATA

(e) SAMPLING START PULSE

(f) SAMPLING PULSE

0 065 992